# EUROPÄISCHE PATENTSCHRIFT

(11) **EP 3 109 069 B1**
(45) Veröffentlichungstag und Bekanntmachung des Hinweises auf die Patenterteilung: **01.01.2020**
(21) Anmeldenummer: 16173694.7
(22) Anmeldetag: 09.06.2016
(51) Int. Cl.: B60D 1/155, B60R 9/06, B60P 3/12

(54) **ABSCHLEPPVORRICHTUNG**
TOWING DEVICE
DISPOSITIF DE REMORQUAGE

(30) Priorität: 25.06.2015 DE 102015008083
(43) Veröffentlichungstag der Anmeldung: 28.12.2016
(73) Patentinhaber: CarCaddy UG (haftungsbeschränkt) & Co. KG, 48477 Hörstel (DE)
(72) Erfinder: Vorndieck, Josef, 49477 Ibbenbüren (DE)
(74) Vertreter: Lenzing Gerber Stute

(56) Entgegenhaltungen:
- WO-A1-03/099608
- GB-A- 2 416 336
- US-A1- 2007 235 985

## Beschreibung

Die vorliegende Erfindung betrifft eine Abschleppvorrichtung mit den Merkmalen des Oberbegriffs des Anspruchs 1.

Im Straßenverkehr betriebsunfähig gewordene Kraftfahrzeuge stellen ein Verkehrshindernis dar. Insbesondere auf Autobahnen besteht eine erhöhte Unfallgefahr, selbst wenn das liegengeblieben Fahrzeug auf dem Standstreifen steht. Solche Fahrzeuge sollten möglichst bald an einen sicheren Ort verbracht werden. Im Idealfall kann ein Werkstattfahrzeug selbst das liegengebliebene Fahrzeug zumindest aus der Gefahrenzone abschleppen, so dass es nicht notwendig ist, am Pannenort auf ein speziell ausgerüstetes Abschleppfahrzeug zu warten.

Zwar können betriebsunfähige Fahrzeuge teilweise durch qualifizierte Fahrzeugtechniker vor Ort, z.B. am Straßenrand, repariert werden. Es kann aber auch vorkommen, dass eine zufriedenstellende Reparatur am Straßenrand nicht möglich ist und das Kraftfahrzeug bis zur nächsten Werkstatt abgeschleppt werden muss. Das betriebsunfähige Fahrzeug kann mit Hilfe einer Kette, eines Seils, einer Abschleppstange oder einer Abschleppachse von einem Kraftfahrzeug gezogen werden.

Im Gegensatz zum Abschleppseil und zur Abschleppstange müssen bei der Verwendung einer Abschleppachse weder die Bremsen noch die Lenkung des zu ziehenden Fahrzeugs intakt sein. Abschleppachsen sind Achsen, die dazu bestimmt sind, bei einem abzuschleppenden mehrachsigen Fahrzeug eine Achse in deren Funktion zu ersetzen. Mittig über der Achse ist eine drehbar gelagerte Traverse montiert, deren Enden so ausgeformt sind (z. B. durch Mulden oder ein rechteckiges Rohr), dass sie als Aufnahme und Fixierung der Räder eines (abzuschleppenden) Fahrzeuges dienen können.

Es ist bekannt, Werkstattwagen so auszurüsten, dass sie einen Abschleppanhänger aufnehmen, der im Transporter verstaut werden kann, wenn er nicht gebraucht wird, und der zum Einsatz hinten aus dem Transporter ausgefahren werden kann.

Die DE-A-4011620 offenbart einen Transporter mit einem starren Abschleppanhänger, der im Inneren verstaut und über eine Hecktür in einen ausgefahrenen Zustand nach außen bewegt werden kann. Die US 2007/0235985 A1 offenbart den Oberbegriff des Anspruchs 1.

Aus der DE 603 12 435 T2 ist eine Abschleppvorrichtung bekannt, die einen Abschleppanhänger aufweist, der in einem Werkstattfahrzeug in verstauter Position angeordnet ist. Der Abschleppanhänger umfasst einen schwenkbaren Arm, der so ausgebildet ist, dass er sich um sein Gelenk bewegt, so dass der Anhänger außerhalb des Fahrzeugs für den Einsatz positioniert werden kann. Es ist Aufgabe der vorliegenden Erfindung, eine zusammenklappbare Abschleppvorrichtung bereitzustellen, die im eingeklappten Zustand am Kraftfahrzeug transportierbar ist und eine Ein-Mann-Bedienung ermöglicht. Diese Aufgabe wird von einer Abschleppvorrichtung mit den Merkmalen des Anspruchs 1 gelöst.

Danach ist eine Abschleppvorrichtung zum Befestigen an einer Anhängerkupplung eines Kraftfahrzeuges für den Abtransport eines abzuschleppenden Kraftfahrzeugs mit einem eine Kupplungsanbindung aufweisenden Querträger, der quer zur Fahrtrichtung orientiert ist, und mit zwei an dem Querträger angeordneten hydraulisch verschwenkbaren Radaufhängungen, an denen jeweils ein Rad befestigt ist, vorgesehen, wobei die Verbindung zwischen dem Querträger und der Kupplungsanbindung lösbar ist, so dass die Kupplungsanbindung je nach Betriebszustand der Abschleppvorrichtung austauschbar ist, wobei die Abschleppvorrichtung wahlweise für eine Benutzungsstellung eine Zugkupplungsanbindung aufweist, die mit dem Querträger formschlüssig verbunden ist und wobei die Abschleppvorrichtung für eine Transportstellung oder Bereitschaftsstellung eine Klemmkupplungsanbindung aufweist, die mit dem Querträger mittels eines Schwenklagers verbunden ist. Durch diese Konstruktion der Abschleppvorrichtung kann sie sowohl für den Einsatz als auch den Transport mit der Anhängerkupplung des abschleppenden Kraftfahrzeuges befestigt werden. Das Schwenklager ermöglicht es, die Abschleppvorrichtung im eingeklappten Zustand am Kraftfahrzeug zu transportieren.

Vorzugsweise ist die Abschleppvorrichtung zum Transport mittels des Schwenklagers in Fahrtrichtung klappbar, so dass das gesamte Gewicht der Abschleppvorrichtung auf der Anhängerkupplung liegt. Dabei sind die Räder der Abschleppvorrichtung von der Fahrbahn abgehoben und die Abschleppvorrichtung nimmt in dem eingeklappten Zustand verhältnismäßig wenig Platz ein.

In einer bevorzugten Ausführungsform weist der Querträger zwei in einem Querträger-Mittelteil teleskopierbar gelagerte Radträger auf, an denen jeweils eine hydraulisch verschwenkbare Radaufhängung angeordnet ist. Das Teleskopsystem des Querträgers eignet sich besonders gut, da der Querträger aus Gewichts- und Festigkeitsgründen aus Profilen bestehen muss. Dadurch kann der Bauraum im Inneren des mittleren Querträgers dazu genutzt werden, um die äußeren Radträger zumindest teilweise aufzunehmen.

Vorzugsweise sind die teleskopierbar gelagerten Radträger zwischen einer breiten Einsatzstellung und einer schmalen Transportstellung verstellbar, so dass die durch die StVO vorgegebenen Breiten für die beiden Zustände eingehalten werden können.

Dabei sind die Radträger bevorzugt Rohre, die ein unrundes, insbesondere quadratisches Profil aufweisen.

Vorzugsweise sind zwei Radaufnahmen vorgesehen, die zur Aufnahme von Vorderrädern eines abzuschleppenden Kraftfahrzeugs ausgestaltet sind und die jeweils für einen Einsatz der Abschleppvorrichtung auf einen Radträger in der Einsatzstellung aufsteckbar sind. Die Radaufnahmen können somit für den Transport der Abschleppvorrichtung abgenommen werden, wodurch Gewicht und Bauraum eingespart werden können.

Vorteilhafterweise weist die hydraulisch verschwenkbare Radaufhängung einen Hydraulikzylinder, ein Befestigungselement, eine Radschwinge, und einen an der Radschwinge angeordneten Achsstummel zur Befestigung des Rades auf.

Dabei ist es bevorzugt, wenn die Radaufhängung eine Art Drei-Punkt-Lenker bildet, der die Räder gegenüber dem Querträger auch im beladenen Zustand anheben und absenken kann.

In einer bevorzugten Ausführungsform ist neben dem Hydraulikzylinder einer Radaufhängung eine mechanische Verriegelung angeordnet ist, um den Hydraulikzylinder während des Einsatzes oder des Transportes zu unterstützen. Die mechanische Verriegelung muss dabei zum Verfahren des Hydraulikzylinders gelöst werden.

Vorzugsweise weist das Schwenklager eine Schwenksicherung auf. Diese Schwenksicherung umfasst bevorzugt mehrere Stellungen, so dass der Querträger von dem Fahrzeugheck des abschleppenden Kraftfahrzeugs fahrzeugabhängig beabstandet angeordnet werden kann.

In einer vorteilhaften Ausführungsform ist der Abstand in Fahrtrichtung von einer Zugkupplung zu den Radaufstandspunkten der Räder zwischen 10 mal und 20 mal so groß ist wie der Abstand von den Radaufstandspunkten zu den Radaufnahmen.

Bevorzugte Ausführungsformen der Erfindung werden nachfolgend anhand der Zeichnungen näher erläutert. Gleiche oder funktionsgleiche Bauteile sind in allen Figuren mit denselben Bezugszeichen gekennzeichnet. Es zeigen:
- Fig. 1:: eine räumliche Ansicht einer erfindungsgemäßen Abschleppvorrichtung mit einer Zugkupplungsaufnahme ohne Räder,
- Fig. 2:: eine perspektivische Darstellung der Abschleppvorrichtung aus Fig. 1 in einer Transportstellung,
- Fig. 3:: eine vergrößerte Ansicht der Abschleppvorrichtung im Bereich einer Radaufnahme,
- Fig. 4:: eine vergrößerte Darstellung einer Radaufhängung,
- Fig. 5:: eine räumliche Ansicht einer Schwinge mit einem Hydraulikzylinder und einer mechanischen Verriegelung,
- Fig. 6:: eine perspektivische Darstellung eines an einer Klemmkupplungsaufnahme montierten Querträgers,
- Fig. 7:: eine räumliche Darstellung des Querträgers aus Fig. 6, sowie
- Fig. 8:: eine räumliche Ansicht der Klemmkupplungsaufnahme aus Fig. 6.

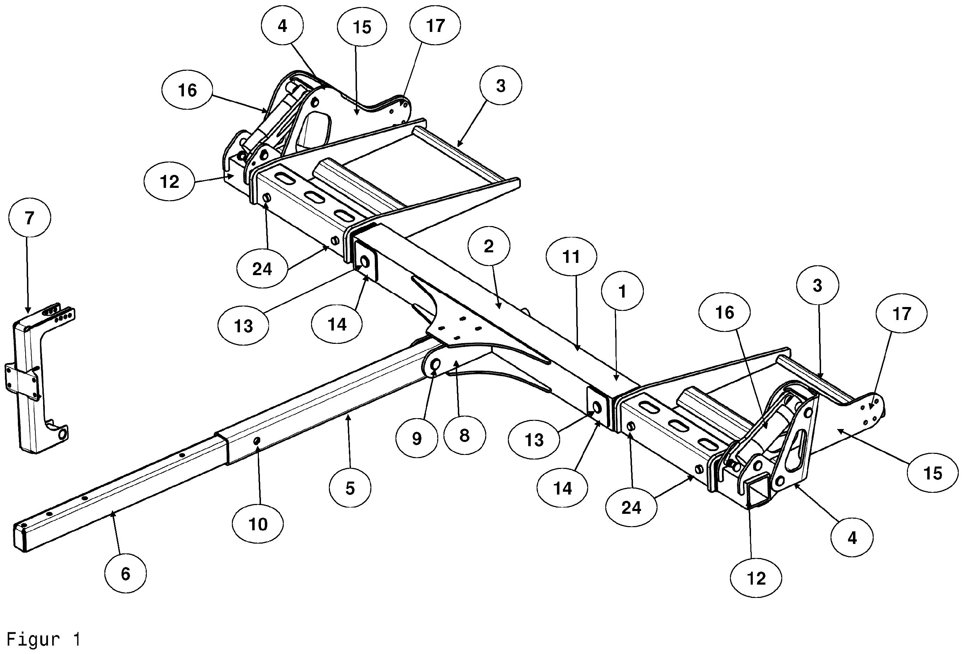

Die in Figur 1 dargestellte Abschleppvorrichtung 1 weist einen teleskopierbaren Querträger 2, zwei abnehmbare Radaufnahmen 3, zwei Radaufhängungen 4 und eine Schleppstange 5 auf. Die Schleppstange 5 ist mit einem Rohr 6 einer Zugkupplungsanbindung verbunden, an dem eine nicht dargestellte Zugkupplung befestigt ist. Die Schleppstange 5 und das Rohr 6 können gegen eine Klemmkupplungsanbindung 7 ausgewechselt werden, die zur Aufnahme einer Klemmkupplung vorgesehen ist. Klemmkupplungen sind aus dem Stand der Technik, beispielsweise von Fahrradträgern, bekannt. Die Kupplungen verbinden die Abschleppvorrichtung 1 mit einer Anhängerkupplung eines Kraftfahrzeugs. Die beiden Kupplungen können je nach Arbeitszustand über ein Wechselsystem ausgetauscht werden, so dass während des Transports lediglich das Gewicht von einer Kupplung auf die Anhängerkupplung wirkt. Die andere Kupplung kann im Kofferraum mitgeführt werden.

Die Kupplungen sind über ein Schwenklager 8 des Querträgers 2 mit diesem verbunden. Da für die Klemmkupplung eine schwenkbare Lagerung vorgesehen ist, um die ganze Vorrichtung hochzuklappen, ist neben dem Schwenklager 8 ein den Querträger 2 und die Schleppstange 5 durchsetzender Bolzen 9 zur Schwenksicherung vorgesehen. Der Längsträger der Zugkupplung, aufweisend die Zugkupplungsanbindung 6 und die Schleppstange 5, weist keine Sicherung gegen Verdrehung auf, da das viereckige Profil formschlüssig in den Querträger 2 eingeschoben wird. Die Bewegung des Längsträgers in Längsrichtung ist durch die Bolzen 9, 10 gesichert.

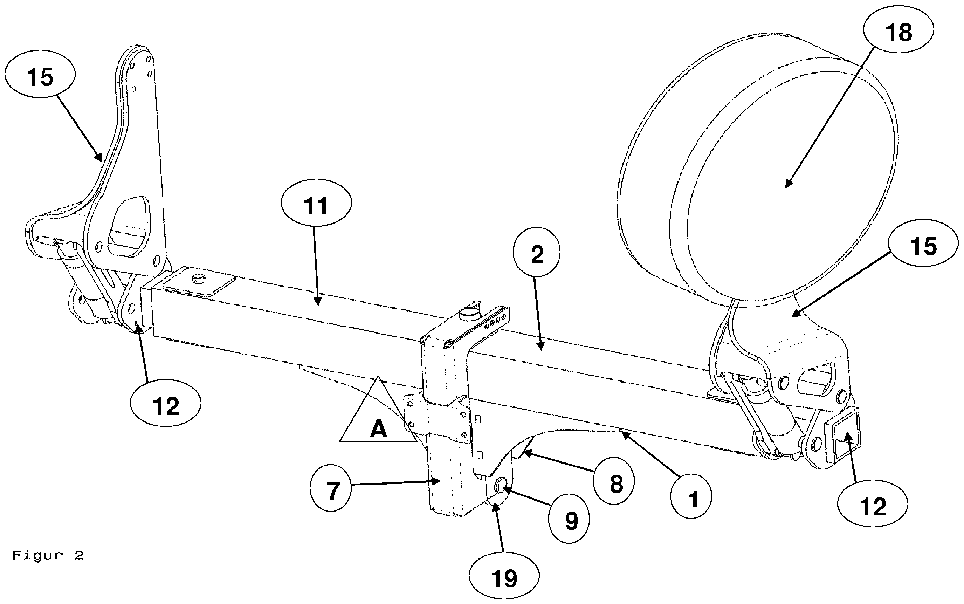

Wie in Figur 2 dargestellt ist, wird die Abschleppvorrichtung 1 zum Transport hochgeklappt. Da die Abschleppvorrichtung 1 hochgeklappt die Fahrzeugbreite und im ausgeklappten Zustand, laut § 32 StVO, eine Breite von 2.50 m nicht überschreiten darf, ist der Querträger 2 teleskopierbar ausgestaltet um beide Arbeitsstellung abzudecken. Der Querträger 2 weist drei ineinander verschiebbare viereckige Profile auf, das Querträger-Mittelteil 11 und zwei Radträger 12, die jeweils auf einer Seite des Querträger-Mittelteils 11 liegend angeordnet sind. Zum Transport werden die Radträger 12 teilweise in das Querträger-Mittelteil 11 geschoben, um die Gesamtbreite der Abschleppvorrichtung zu reduzieren.

Zwischen den Trägern 11, 12 sind teilweise hier nicht dargestellte Kunststoffplatten vorgesehen. Die Kunststoffplatten können sehr gut Druckbelastungen standhalten und dienen zugleich als Gleitunterlage zwischen den Trägern 11, 12. Dadurch kommt es zu keinem Verschleiß durch unmittelbaren metallischen Kontakt zwischen den Trägern, was sich wiederum positiv auf die Langlebigkeit der Abschleppvorrichtung auswirkt. Um die Radträger 12 in gewünschter Position zu halten, werden diese durch einen das Querträger-Mittelteil 11 und den Radträger 12 durchsetzenden Bolzen 13 in Querrichtung festgehalten. Der Radträger 12 weist dazu zwei Bohrungen auf, um den Träger in einem ausgefahrenen und einem eingefahrenen Zustand zu halten. Damit es zu keiner belastungsbedingten Verformung im Bereich der Bohrungen kommt, sind an dem Querträger-Mittelteil 11 Verstärkungsbleche 14 an den Bohrungen angebracht und in den Radträgern 12 Rohre in die Bohrungen eingelassen.

Damit der Ladevorgang der Abschleppvorrichtung 1 von einer Einzelperson durchführbar ist, weist die Abschleppvorrichtung 1 an den beiden Enden des Querträgers 2 jeweils eine Radschwinge 15 mit einem Hydraulikzylinder 16 und einem Achsstummel 17 ähnlich einem Drei-Punkt-Lenker auf, die den Querträger 2 gegenüber den an den Achsstummeln 17 befestigten Rädern 18 absenkt bzw. anhebt.

Zwischen dem Querträger-Mittelteil 11 und den Radschwingen 15 ist im ausgefahren Zustand des Querträgers 2 an den Radträgern 12 jeweils eine Radaufnahme 3 angebracht, die zur Aufnahme von Vorderrädern eines betriebsunfähigen Kraftfahrzeugs geeignet ist. Die Radaufnahmen 3 sind abnehmbar ausgestaltet, damit das Gewicht der Radaufnahmen 3 in der Transportstellung nicht auf der Anhängerkupplung des Hilfsfahrzeugs mitgeführt werden muss, sondern im Innenraum des Fahrzeugs gelagert werden kann.

In der Figur 2 ist die Transportstellung der Abschleppvorrichtung 1 dargestellt. Die Klemmkupplungsanbindung 7 ist besonders kurz ausgestaltet, um den Schwerpunkt der Abschleppvorrichtung 1 in der Transportstellung nah an die Kupplungskugel der Anhängerkupplung zu legen und das durch die Abschleppvorrichtung 1 erzeugte Moment an der Klemmkupplung so klein wie möglich zu halten. In der Arbeitsstellung dagegen ist die Abschleppvorrichtung 1 auf der Anhängerkupplung frei beweglich gelagert, damit im Abschleppvorgang hautsächlich nur Zug- bzw. Druckbelastungen auf die Anhängerkupplung übertragen werden.

Das Hochklappen der Abschleppvorrichtung erfolgt über das Schwenklager 8. Die Kippsicherung weist zwei Laschen 19 mit Bohrungen an der Querträger-Mitte 11 auf, in die der Bolzen 9 gesteckt wird, der wiederum durch die Klemmkupplungsanbindung 7 geht. Dabei sind drei Bohrungen pro Lasche 19 vorgesehen, um verschiedene Stellungen zu ermöglichen. Die verstellbare Transportstellung ermöglicht es, die Abschleppvorrichtung 1 auch an Fahrzeugen einzusetzen, bei denen es in der äußersten vorderen Stellung zur Kollision zwischen dem Fahrzeugheck und der Abschleppvorrichtung 1 kommen würde. Ein weiterer Vorteil einer einstellbaren Transportstellung ist die Möglichkeit des Öffnens des Kofferraumes, ohne die Abschleppvorrichtung komplett herunter klappen zu müssen, wodurch die Bedienerfreundlichkeit erheblich gesteigert wird.

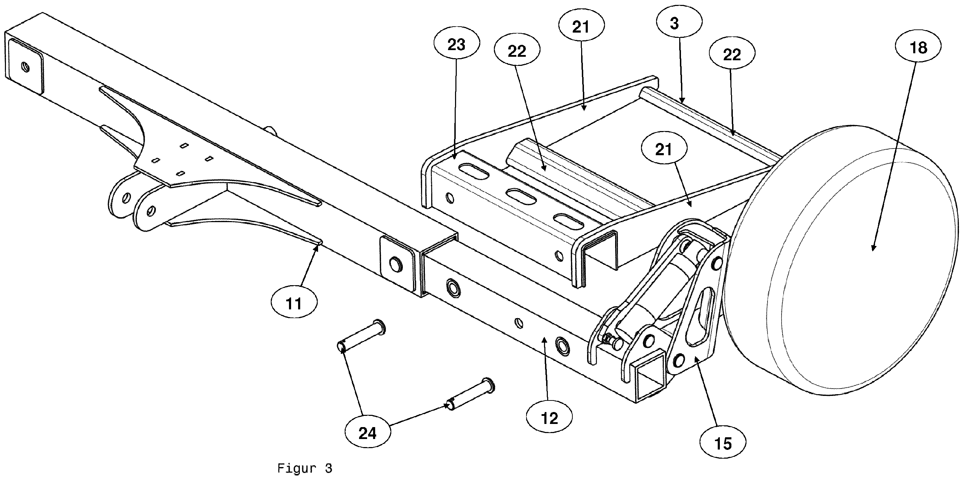

Figur 3 stellt im Detail eine der beiden Radaufnahmen 3 dar. Die Radaufnahmen 3 weisen zwei Längsstreben 21 auf, die durch zwei Querstreben 22 und eine dazu parallel angeordnete Anbindungsstrebe 23 verbunden sind. Die Anbindungsstrebe 23 ist an einem ersten Ende der Längsstreben 21 angeordnet und dient zur Verbindung mit dem Radträger 12. Die Längsstreben 21 sind keilförmig vom Radträger 12 weg zulaufend ausgebildet, damit die Vorderräder des abzuschleppenden Fahrzeugs auf die Radaufnahmen 3 einfach gerollt werden können. Die Querstreben 22 sind unter anderem dazu vorgesehen, das auf der Radaufnahme 3 befindliche Vorderrad mit der Radaufnahme 3 mittels Spanngurten zu verzurren. So kann das betriebsunfähige Kraftfahrzeug sicher mit der Abschleppvorrichtung 1 verbunden werden. Die Anbindungsstrebe 23 ist C-förmig ausgestaltet, so dass sie auf den Radträger 12 von oben aufgesetzt werden kann. Dabei zeigt die offene Seite des C-förmigen Profils zur Fahrbahn, so dass die Gewichtskraft des abgeschleppten Fahrzeugs das C-Profil der Anbindungsstrebe 23 verdreht und an das Profil des Radträgers 12 klemmt. Die Radaufnahmen 3 sind zusätzlich über zwei Bolzen 24 mit dem Radträger 12 zur Fixierung der Lage in Querrichtung verbunden. In einer bevorzugten Ausführungsform sind die Radaufnahmen 3 aus Stahl gebildet.

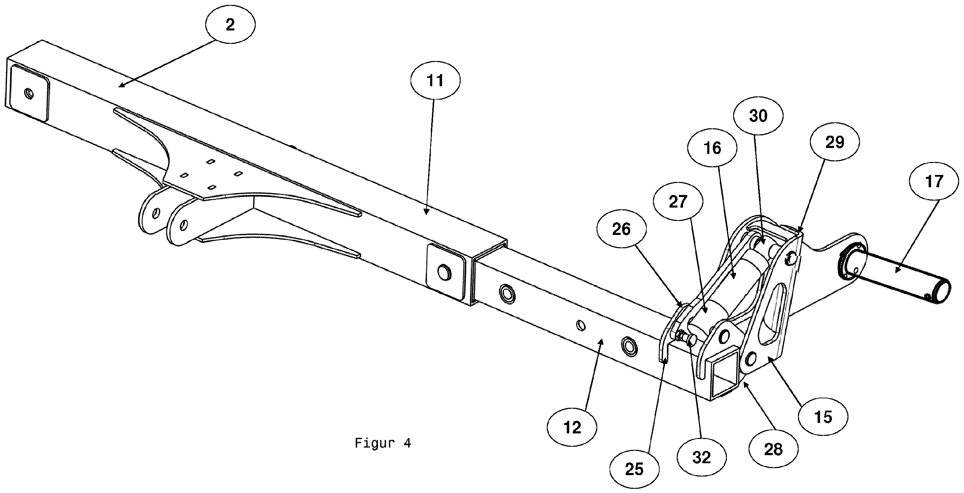

In der Figur 4 ist eine Radschwinge 15 vergrößert dargestellt. Ein Befestigungselement 25 umfasst den Radträger 12 nahezu umfangseitig und ist vorzugsweise mit diesem verschweißt. Das Befestigungselement 25 bildet zwei Schwenklager, ein erstes Schwenklager 26 zur Aufnahme eines ersten Endes 27 des Hydraulikzylinders 16 und ein zweites Schwenklager 28 zur Lagerung der Radschwinge 15. Die Radschwinge 15 ist asymmetrisch ausgestaltet um das am Achsstummel 17 befestigte Rad 18 möglichst weit in die Schwinge 15 aufzunehmen und um die maximal erlaubte Breite der Abschleppvorrichtung 1 einzuhalten. Die Radschwinge 15 weist ein drittes Schwenklager 29 auf, in dem sie mit dem zweiten Ende 30 des Hydraulikzylinders 16 befestigt ist. Die Schwenklager 26, 28, 29 bilden einen Drei-Punkt-Lenker, der über definierte Hebelarme die Räder 18 der Abschleppvorrichtung 1 anhebt.

Vorzugsweise ist die Schwinge 15 aus Stahl hergestellt, um den angreifenden Belastungen standzuhalten. Die Fertigung erfolgt bevorzugt über mittels Laserschneiden konfektionierte Stahlbleche, die gebogen und miteinander verschweißt werden.

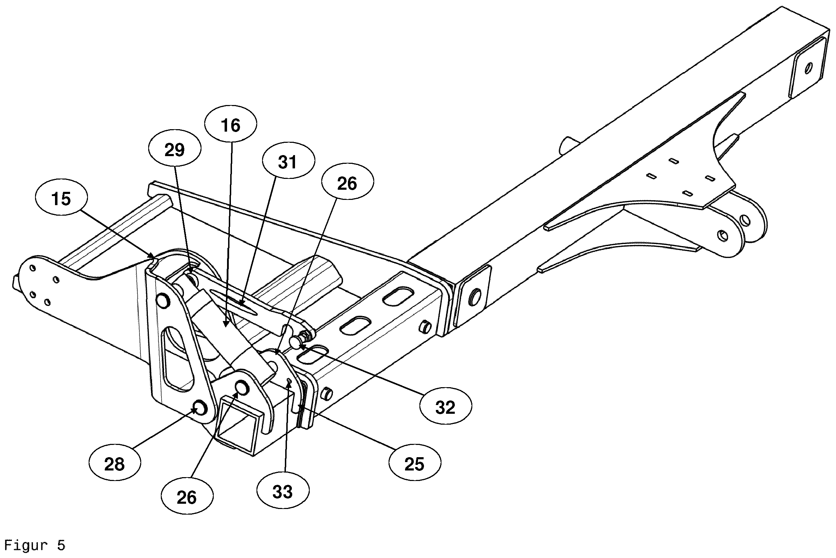

Es kann vorgesehen sein, eine mechanische Verriegelung 31 neben dem Hydraulikzylinder 16, wie in Figur 5 dargestellt, anzuordnen, die den Hydraulikzylinder 16 für den Transport und bei Abschlepparbeiten entlastet. Die Kräfte werden dann nicht über den Arbeitszylinder 16, sondern über die mechanische Verriegelung 31 übertragen. Die mechanische Verrieglung 31 ist vorzugsweise als Laserteil konstruiert, um den Fertigungsaufwand gering zu halten. Die Verriegelung 31 ist am dritten Schwenklager 29 schwenkbar gelagert und wird an das erste Schwenklager 26 eingeschwenkt und mit diesem verrastet. Dazu befindet sich ein Rastbolzen 32 an der Verriegelung 31, der in eine Ausnehmung 33 des Befestigungselements 25 einrastet. Aufgrund eines Langlochs in dem Befestigungselement wird der Rastbolzen 32 in der Hydraulikzylinderrichtung nicht belastet. Die Kraft in Zylinderrichtung wird allein durch die mechanische Verriegelung 31 und die Schwenklager 26, 29 übertragen. Zum Auf- oder Abladen eines Fahrzeugs wird zuerst der Rastbolzen 32 an der Verriegelung 31 gelöst und die Verriegelung 31 hochgeschwenkt und dann der Hydraulikzylinder 16 eingefahren. Damit die Verrieglung 31 nicht herunterfällt und das Einfahren des Hydraulikzylinders 16 blockiert, sind an der Schwinge 15 und an der Verrieglung 31 hier nicht dargestellte Befestigungshaken oder Schrauben angebracht, an denen eine weiche Zugfeder oder eine Drahtschlaufe montiert werden kann. Die Zugfeder sichert den angehobenen Zustand der Verriegelung, ist aber weich genug, um die Verriegelung mit nur wenig Kraftaufwand herunterzudrücken und einzurasten.

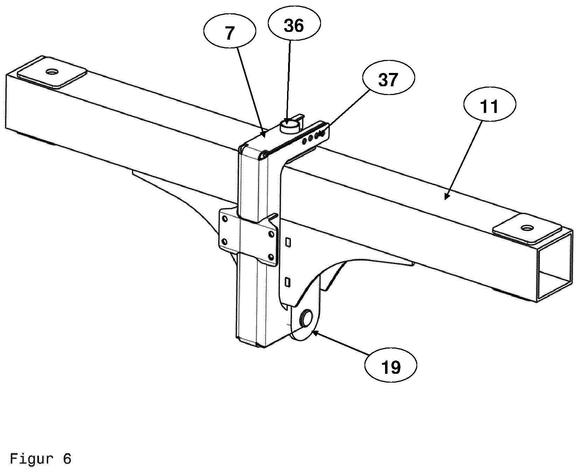

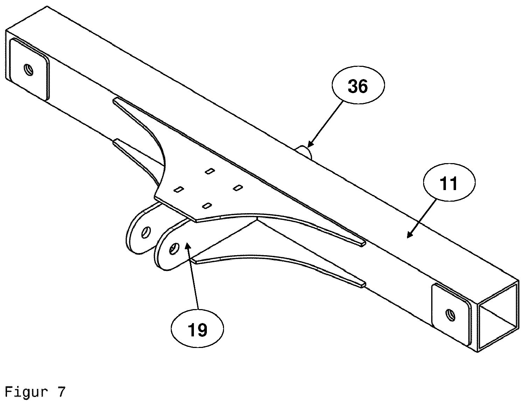

Die Figur 6 zeigt eine bevorzugte Ausführungsform der Querträger-Mitte 11 im Zusammenspiel mit einer Klemmkupplungsanbindung 7 in einer Transportstellung. Die Laschen 19 des Querträger-Mittelteils 11 sind kleiner ausgestaltet als in der Ausführungsform der Figur 1, um mehr Bodenfreiheit zu gewährleisten. Aufgrund der kleineren Laschen 19 (vgl. Figur 7) kann neben der Bohrung für die Schwenkachse keine weitere Bohrung eingebracht werden, um den Aufbau in der Transportstellung zu sichern. Besonders eine verstellbare Sicherung durch mehrere Bohrungen, die eine Vergrößerung der Distanz zwischen Fahrzeugheck und Abschleppvorrichtung in verschiedenen Stellungen zulässt, ist an den verkleinerten Laschen nicht vorteilhaft umzusetzen.

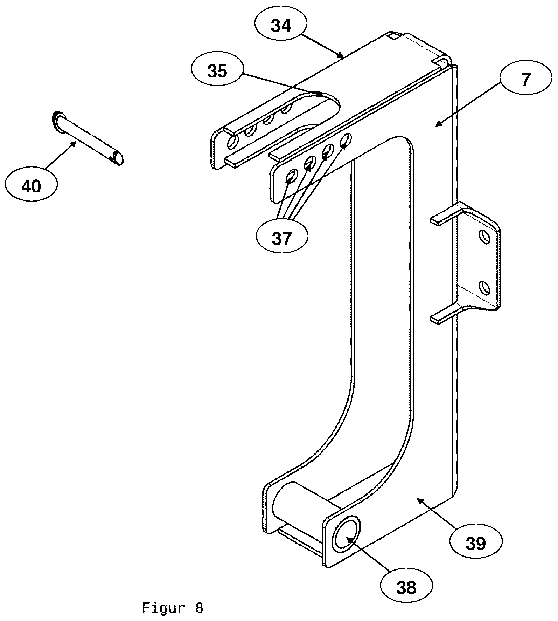

Figur 8 zeigt eine an das Querträger-Mittelteil 11 angepasste C-förmig ausgestaltete Klemmkupplungsanbindung 7, die in der zusammengeklappten Transportstellung das Querträger-Mittelteil 11 umfasst. An ihrem einen Schenkel 39 weist die Klemmkupplungsanbindung 7 ein Schwenklager 38 zur Anbindung an das Querträger-Mittelteil 11 auf und an ihrem anderen Schenkel 34 ist ein Einschnitt 35 zur Aufnahme eines an dem Querträger-Mittelteil 11 angeordneten Rohrstücks 36 vorgesehen. Das Rohrstück 36 ist in der Figur 7 dargestellt und dient als Aufnahme für ein Rohr zum vereinfachten Anheben der Abschleppvorrichtung 1. Der eine Schenkel 34 weist jeweils vier seitlich von dem Einschnitt 35 angeordnete und auf einem Kreisbogen liegende Bohrungen 37 auf. Um den Querträger 2 im hochgeklappten Zustand zu sichern, ist ein Bolzen 40 vorgesehen, der durch jeweils zwei korrespondierende Bohrungen 37 greift und die Lage des Rohrstücks 36 in dem Einschnitt 35 fixiert und somit die Lage des Querträgers 2 zur Klemmkupplungsanbindung 7 sichert. Die vier Bohrungen 37 ermöglich dabei verschiedene Stellungen des Querträgers 2.

Die erfindungsgemäße Abschleppvorrichtung 1 ist so konstruiert, dass sie in einem eingeklappten Zustand am Kraftfahrzeug transportierbar ist. Zudem ermöglicht sie durch ihren leichten Aufbau eine Ein-Mann-Bedienung.

## Patentansprüche

1. Abschleppvorrichtung (1) zum Befestigen an einer Anhängerkupplung eines Kraftfahrzeuges für den Abtransport eines abzuschleppenden Kraftfahrzeugs mit einem eine Kupplungsanbindung (6, 7) aufweisenden Querträger (2), der quer zur Fahrtrichtung orientiert ist, und mit zwei an dem Querträger (2) angeordneten hydraulisch verschwenkbaren Radaufhängungen (4), an denen jeweils ein Rad (18) befestigt ist,
wobei die Verbindung zwischen dem Querträger (2) und der Kupplungsanbindung (6, 7) lösbar ist,
**dadurch gekennzeichnet, dass** die Verbindung zwischen dem Querträger (2) und der Kupplungsanbindung (6, 7) lösbar ist, so dass die Kupplungsanbindung (6, 7) je nach Betriebszustand der Abschleppvorrichtung (1) austauschbar ist, wobei die Abschleppvorrichtung (1) für eine Betriebsstellung eine Zugkupplungsanbindung (6) aufweist, die mit dem Querträger (2) formschlüssig verbunden ist, und wobei die Abschleppvorrichtung (1) für eine Transportstellung eine Klemmkupplungsanbindung (7) aufweist, die mit dem Querträger (2) mittels eines Schwenklagers (8) verbunden ist.

2. Abschleppvorrichtung (1) nach Anspruch 1, **dadurch gekennzeichnet, dass** die Abschleppvorrichtung (1) zum Transport mittels des Schwenklagers (8) in Fahrtrichtung hochklappbar ist, so dass das gesamte Gewicht der Abschleppvorrichtung (1) auf der Anhängerkupplung liegt.

3. Abschleppvorrichtung (1) nach Anspruch 1 oder 2, **dadurch gekennzeichnet, dass** der Querträger (2) zwei in einem Querträger-Mittelteil (11) teleskopierbar gelagerte Radträger (12) aufweist, an denen jeweils eine hydraulisch verschwenkbare Radaufhängung (4) angeordnet ist.

4. Abschleppvorrichtung (1) nach Anspruch 2, **dadurch gekennzeichnet, dass** die teleskopierbar gelagerten Radträger (12) zwischen einer breiten Betriebsstellung und einer schmalen Transportstellung verstellbar sind.

5. Abschleppvorrichtung (1) nach einem der vorhergehenden Ansprüche, **dadurch gekennzeichnet, dass** die Radträger (12) Rohre sind und ein unrundes, insbesondere quadratisches Profil aufweisen.

6. Abschleppvorrichtung (1) nach Anspruch 4, **dadurch gekennzeichnet, dass** zwei Radaufnahmen (3) vorgesehen sind, die zur Aufnahme von Vorderrädern eines abzuschleppenden Kraftfahrzeugs ausgestaltet sind und die jeweils für einen Einsatz der Abschleppvorrichtung (1) auf einen Radträger (12) in der Betriebsstellung aufsteckbar sind.

7. Abschleppvorrichtung (1) nach einem der vorhergehenden Ansprüche, **dadurch gekennzeichnet, dass** die hydraulisch verschwenkbare Radaufhängung (4) einen Hydraulikzylinder (16), ein Befestigungselement (25), eine Radschwinge (15), und einen an der Radschwinge (15) angeordneten Achsstummel (17) zur Befestigung des Rades (18) umfasst.

8. Abschleppvorrichtung (1) nach einem der vorhergehenden Ansprüche, **dadurch gekennzeichnet, dass** die Radaufhängung (4) einen Drei-Punkt-Lenker bildet.

9. Abschleppvorrichtung (1) nach Anspruch 7, **dadurch gekennzeichnet, dass** neben dem Hydraulikzylinder (16) einer Radaufhängung (4) eine mechanische Verriegelung (31) angeordnet ist, um den Hydraulikzylinder (16) während des Einsatzes oder des Transportes zu unterstützen.

10. Abschleppvorrichtung (1) nach einem der Ansprüche 7 bis 9, **dadurch gekennzeichnet, dass** zu einer Beladung der Abschleppvorrichtung der Hydraulikzylinder (16) den Querträger (2) gegenüber den Rädern (18) absenkt.

11. Abschleppvorrichtung (1) nach einem der vorhergehenden Ansprüche, **dadurch gekennzeichnet, dass** das Schwenklager (8) eine Schwenksicherung (9, 37) aufweist.

12. Abschleppvorrichtung (1) nach einem der vorhergehenden Ansprüche, **dadurch gekennzeichnet, dass** in der Betriebsstellung der Abstand in Fahrtrichtung von einer Zugkupplung zu den Radaufstandspunkten der Räder zwischen 10mal und 20mal so groß ist wie der Abstand von den Radaufstandspunkten zu den Radaufnahmen (3).

## Claims

1. Towing device (1) to fasten to a trailer coupling of a motor vehicle for the removal of a motor vehicle to be towed having a cross member (2) comprising a coupling attachment (6, 7) which is oriented transverse to the direction of travel and having two hydraulically pivotable wheel suspensions (4) arranged on the cross member (2) to which in each case one wheel (18) is fastened, wherein the connection between cross member (2) and the coupling attachment (6, 7) is detactable, **characterised in that** the connection between the cross member (2) and the coupling attachment (6, 7) is detactable, such that the coupling attachment (6, 7) is interchangeable depending on the operational status of the towing device (1),
wherein the towing device (1) has a draw coupling attachment (6) for an operational position which is connected to the cross member (2) in a positive-locking manner,
and wherein the towing device (1) has a clamp coupling attachment (7) for a transport position which is connected to the cross member (2) by means of a pivot bearing (8).

2. Towing device (1) according to claim 1, **characterised in that** the towing device (1) can be folded up for transport by means of the pivot bearing (8) in the direction of travel such that the entire weight of the towing device (1) rests on the trailer coupling.

3. Towing device (1) according to claim 1 or 2, **characterised in that** the cross member (2) has two wheel carriers (12) telescopably mounted in a cross member middle part (11) on which in each case one hydraulically pivotable wheel suspension (4) is arranged.

4. Towing device (1) according to claim 2, **characterised in that** the telescopably mounted wheel carriers (12) are adjustable between a wide operational position and a narrow transport position.

5. Towing device (1) according to any one of the preceding claims, **characterised in that** the wheel carriers (12) are pipes and have a non-round, in particular square profile.

6. Towing device (1) according to claim 4, **characterised in that** two wheel receiving means (3) are provided which are configured to receive front wheels of a motor vehicle to be towed and which in each case for use of the towing device (1) can be placed on a wheel carrier (12) in the operational position.

7. Towing device (1) according to any one of the preceding claims, **characterised in that** the hydraulically pivotable wheel suspension (4) comprises a hydraulic cylinder (16), a fastening element (25), a wheel swingarm (15) and an axle stub (17) arranged on the wheel swingarm (15) for fastening the wheel (18).

8. Towing device (1) according to any one of the preceding claims, **characterised in that** the wheel suspension (4) forms a three-point link.

9. Towing device (1) according to claim 7, **characterised in that** a mechanical lock (31) is arranged beside the hydraulic cylinder (16) of a wheel suspension (4) in order to support the hydraulic cylinder (16) during use or transport.

10. Towing device (1) according to any one of claims 7 to 9, **characterised in that** the hydraulic cylinder (16) lowers the cross member (2) with respect to the wheel (18) for loading of the towing device.

11. Towing device (1) according to any one of the preceding claims, **characterised in that** the pivot bearing (8) has a pivot securing means (9, 37).

12. Towing device (1) according to any one of the preceding claims, **characterised in that** in the operational position the distance in the direction of the travel from a draw coupling to the wheel contact points of the wheels is between 10 times and 20 times as great as the distance from the wheel contact points to the wheel receiving means (3).

## Revendications

1. Dispositif de remorquage (1) destiné à être fixé à un attelage de remorque d'un véhicule automobile pour le transport d'un véhicule automobile à remorquer avec une traverse (2) présentant un raccordement d'accouplement (6, 7), cette traverse (2) étant orientée transversalement par rapport au sens de marche, et avec deux suspensions de roue (4) pouvant pivoter de manière hydraulique et étant agencées sur la traverse (2), sur lesquelles est fixée respectivement une roue (18), le raccordement entre la traverse (2) et le raccordement d'accouplement (6, 7) étant amovible, **caractérisé en ce que** le raccordement entre la traverse (2) et le raccordement d'accouplement (6, 7) est amovible, de sorte que le raccordement d'accouplement (6, 7), selon l'état de fonctionnement du dispositif de remorquage (1), est interchangeable, le dispositif de remorquage (1) présentant, pour une position de fonctionnement, un raccordement d'attelage de traction (6) qui est relié, par liaison de forme, avec la traverse (2), et le dispositif de remorquage (1) présentant, pour une position de transport, un raccordement d'accouplement à serrage (7) qui est relié, à l'aide d'un palier de pivotement (8), avec la traverse (2).

2. Dispositif de remorquage (1) selon la revendication 1, **caractérisé en ce que** le dispositif de remorquage (1) peut être rabattu vers le haut, dans le sens de marche, pour le transport à l'aide du palier de pivotement (8) de sorte que l'ensemble du poids du dispositif de remorquage (1) est placé sur l'attelage de remorquage.

3. Dispositif de remorquage (1) selon la revendication 1 ou 2, **caractérisé en ce que** la traverse (2) présente deux supports de roue (12) logés de manière télescopique dans une partie centrale de traverse (11) sur lesquels est agencée respectivement une suspension de roue (4) pouvant pivoter de manière hydraulique.

4. Dispositif de remorquage (1) selon la revendication 2, **caractérisé en ce que** les supports de roue (12) logés de manière télescopique sont réglables entre une position de fonctionnement large et une position de transport étroite.

5. Dispositif de remorquage (1) selon l'une des revendications précédentes, **caractérisé en ce que** les supports de roue (12) sont des tubes et présentent un profil rond, en particulier carré.

6. Dispositif de remorquage (1) selon la revendication 4, **caractérisé en ce que** l'on prévoit deux logements de roue (3) qui sont équipés pour loger les roues avant d'un véhicule automobile à remorquer et qui peuvent être emboités dans la position de fonctionnement, respectivement pour une utilisation du dispositif de remorquage (1), sur un support de roue (12).

7. Dispositif de remorquage (1) selon l'une des revendications précédentes, **caractérisé en ce que** la suspension de roue (4) pouvant pivoter de manière hydraulique comporte un cylindre hydraulique (16), un élément de fixation (25), un bras oscillant (15), et une fusée d'essieux (17) agencée sur le bras oscillant (15) pour la fixation de la roue (18).

8. Dispositif de remorquage (1) selon l'une des revendications précédentes, **caractérisé en ce que** la suspension de roue (4) forme un guidon trois points.

9. Dispositif de remorquage (1) selon la revendication 7, **caractérisé en ce qu'**à côté du cylindre hydraulique (16) d'une suspension de roue (4) est agencé un verrouillage mécanique (31) afin de soutenir le cylindre hydraulique (16) pendant l'utilisation ou le transport.

10. Dispositif de remorquage (1) selon l'une des revendications 7 à 9, **caractérisé en ce que**, lors d'un chargement du dispositif de remorquage, le cylindre hydraulique (16) abaisse la traverse (2) par rapport aux roues (18).

11. Dispositif de remorquage (1) selon l'une des revendications précédentes, **caractérisé en ce que** le palier de pivotement (8) présente un dispositif anti-pivotement (9, 37).

12. Dispositif de remorquage (1) selon l'une des revendications précédentes, **caractérisé en ce que**, dans la position de fonctionnement, la distance dans le sens de marche entre un attelage de traction et des points d'appui de roue des roues est de 10 à 20 fois la distance entre les points d'appui de roue et les logements de roue (3).
